# EUROPEAN PATENT APPLICATION

(11) **EP 3 998 659 A1**
(43) Date of publication of application: **18.05.2022**
(21) Application number: 20913588.8
(22) Date of filing: 30.11.2020
(51) Int. Cl.: H01M 4/505, H01M 4/525, H01M 4/131, H01M 10/0525, H01M 10/058, C01G 53/00

(54) **COBALT-FREE LAYERED POSITIVE ELECTRODE MATERIAL AND PREPARATION METHOD THEREFOR, POSITIVE ELECTRODE PLATE, AND LITHIUM ION BATTERY**

(30) Priority: 17.01.2020 CN 202010054701
(71) Applicant: SVOLT ENERGY TECHNOLOGY CO., LTD, Changzhou, Jiangsu 213200 (CN)
(72) Inventor: QIAO, Qiqi, hangzhou, Jiangsu 213200 (CN); JIANG, Weijun, hangzhou, Jiangsu 213200 (CN); XU, Xinpei, hangzhou, Jiangsu 213200 (CN); SHI, Zetao, hangzhou, Jiangsu 213200 (CN); MA, Jiali, hangzhou, Jiangsu 213200 (CN)
(74) Representative: Novagraaf Technologies
(86) International application number: PCT/CN2020/132906
(87) International publication number: WO 2021/143374

(57) **Abstract**

The present disclosure provides a cobalt-free lamellar cathode material and a method for preparing the cobalt-free lamellar cathode material, a cathode piece and a lithium ion battery. The cobalt-free lamellar cathode material comprises a LiNiₓMn_{y}O₂ crystal, wherein x+y=1, 0.55≤x≤0.95, 0.05≤y≤0.45; and a lithium ion conductor, the lithium ion conductor being attached to at least part of a surface of the LiNiₓMn_{y}O₂ crystal. The cobalt-free lamellar cathode material has the advantages of low cost, low surface impedance and good conductivity. Lithium ions have high diffusion velocity and electrochemical activity in the cobalt-free lamellar cathode material. A lithium ion battery manufactured by the cobalt-free lamellar cathode material has the advantages of high charge specific capacity, high discharge specific capacity, high first effect, good cycle performance and good rate capability.

## Description

### Technical Field

The disclosure belongs to the technical field of lithium ion batteries, in particular to a cobalt-free lamellar cathode material and a method for preparing the cobalt-free lamellar cathode material, a cathode piece and a lithium ion battery.

### Background

At present, with rapid development of new energy automobile industry, the requirement on the lithium ion battery is higher and higher. Among four principle materials of the lithium ion battery, a cathode active material plays a critical role. In the cathode active material in related art, a ternary cathode active material is widely applied due to high capacity, voltage and cycling stability. However, as the ternary cathode active material contains a certain amount of cobalt, the ternary cathode active material is expensive. Therefore, only the cobalt content in the ternary cathode active material is reduced can the cost of the cathode active material be lowered better. When the cathode active material does not contain cobalt completely, the cost is lowest, namely, a cobalt-free lamellar cathode material. It is a pity that as the cobalt-free lamellar cathode material in the related art does not contain cobalt, the cobalt-free lamellar cathode material is poor in conductivity, and the diffusion velocity of lithium ions in the cobalt-free lamellar cathode material is low, too.

Thus, the related art of the existing cobalt-free lamellar cathode material needs to be improved.

### Summary

The present disclosure aims to at least solve one of the technical problems in the related art to a certain extent. Thus, an objective of the present disclosure is to provide a cobalt-free lamellar cathode material which has the advantages of low cost, low surface impedance and good conductivity. Lithium ions have high diffusion velocity and electrochemical activity in the cobalt-free lamellar cathode material. A lithium ion battery manufactured by the cobalt-free lamellar cathode material has the advantages of high charge specific capacity, high discharge specific capacity, high first effect, good cycle performance and good rate capability.

In an aspect of the present disclosure, the present disclosure provides a cobalt-free lamellar cathode material for a lithium ion battery. According to the embodiments of the present disclosure, the cobalt-free lamellar cathode material includes a LiNi_{0.75}Mn_{0.25}O₂ crystal; and a lithium ion conductor, the lithium ion conductor being attached to at least part of a surface of the LiNi_{0.75}Mn_{0.25}O₂ crystal, the lithium ion conductor including at least one of lithium titanate or lithium manganate, and a mass percentage of the lithium ion conductor being 0.1-2% based on a total mass of the cobalt-free lamellar cathode material, a specific surface area of the cobalt-free lamellar cathode material being 0.1-0.8m²/g and a D₅₀ particle size of the cobalt-free lamellar cathode material being 1-10µm. The inventors find that the cobalt-free lamellar cathode material has the advantages of low cost, low surface impedance and good conductivity. Lithium ions have high diffusion velocity and electrochemical activity in the cobalt-free lamellar cathode material. A lithium ion battery manufactured by the cobalt-free lamellar cathode material has the advantages of high charge specific capacity, high discharge specific capacity, high first effect, good cycle performance and good rate capability.

In another aspect of the present disclosure, the present disclosure provides a cobalt-free lamellar cathode material for a lithium ion battery. According to the embodiments of the present disclosure, the cobalt-free lamellar cathode material includes a LiNiₓMn_{y}O₂ crystal, wherein x+y=1, 0.55≤x≤0.95, 0.05≤y≤0.45; and a lithium ion conductor, the lithium ion conductor being attached to at least part of a surface of the LiNiₓMn_{y}O₂ crystal. The inventors find that the cobalt-free lamellar cathode material has the advantages of low cost, low surface impedance and good conductivity. Lithium ions have high diffusion velocity and electrochemical activity in the cobalt-free lamellar cathode material. A lithium ion battery manufactured by the cobalt-free lamellar cathode material has the advantages of high charge specific capacity, high discharge specific capacity, high first effect, good cycle performance and good rate capability.

According to the embodiments of the present disclosure, the lithium ion conductor includes at least one of lithium titanate and lithium manganate.

According to the embodiments of the present disclosure, the lithium ion conductor is lithium titanate, and a mass percent of lithium titanate is 0.1-1% based on the total mass of the cobalt-free lamellar cathode material.

According to the embodiments of the present disclosure, the lithium ion conductor is lithium manganate, and a mass percent of lithium manganate is 0.1-2% based on the total mass of the cobalt-free lamellar cathode material.

According to the embodiments of the present disclosure, the cobalt-free lamellar cathode material meets at least one of following conditions: a specific surface area of the cobalt-free lamellar cathode material is 0.1-0.8 m²/g; a D₅₀ particle size of the cobalt-free lamellar cathode material is 1-10 µm, x is 0.75 and y is 0.25.

In another aspect of the present disclosure, the present disclosure provides a method for preparing the cobalt-free lamellar cathode material. According to the embodiments of the present disclosure, the method includes: providing the LiNiₓMn_{y}O₂ crystal; mixing the LiNiₓMn_{y}O₂ with a material forming the lithium ion conductor to obtain a first mixture; and conducting first roasting treatment on the first mixture in an oxygen-containing atmosphere for 5-10 hours at 600-800°C to obtain the cobalt-free lamellar cathode material. The inventors find that the method is easy and convenient to operate and easy to realize and easy for industrial production, and can prepare the cobalt-free lamellar cathode material effectively.

According to the embodiments of the present disclosure, the material forming the lithium ion conductor includes a first lithium source; and at least one of a titanium source or a first manganese source.

According to the embodiments of the present disclosure, the titanium source includes at least one of tetrabutyl titanate or titanium oxide.

According to the embodiments of the present disclosure, the first manganese source includes at least one of manganese carbonate, manganese acetate or manganese oxide.

According to the embodiment of the present disclosure, the LiNiₓMn_{y}O₂ crystal is provided by the following steps: mixing a second lithium source, a nickel source and a second manganese source to obtain a second mixture; and conducting second roasting treatment on the second mixture for 10-15 hours in an oxygen-containing atmosphere to obtain the LiNiₓMn_{y}O₂ crystal.

According to the embodiment of the present disclosure, the first lithium source and the second lithium source each independently include at least one of LiOH, Li₂CO₃, CH₃COOLi and LiNO₃.

According to the embodiment of the present disclosure, the nickel source and the second manganese source each independently comprise NiₐMn_{b}(OH)₂, wherein 0.55≤a≤0.95, 0.05≤b≤0.45.

In another aspect of the present disclosure, the present disclosure provides a cathode piece. According to the embodiment of the present disclosure, the cathode piece includes the cobalt-free lamellar cathode material. The inventors find that the cathode piece has the advantages of low cost and good conductivity, the lithium ion battery manufactured by the cathode piece has the advantages of high specific charge capacity, high specific discharge capacity, high first efficiency, good cycle performance and good rate capability, and the cathode piece has all characteristics and advantages of the cobalt-free lamellar cathode material and are not described repeatedly herein.

In yet another aspect of the present disclosure, the present disclosure provides a lithium ion battery. According to the embodiments of the present disclosure, the lithium ion battery includes an anode, a cathode, a battery diaphragm and an electrolyte, wherein the cathode includes the cobalt-free lamellar cathode material or the cathode piece. The inventors find that the lithium ion battery has the advantages of high specific charge capacity, high specific discharge capacity, high first efficiency, good cycle performance and good rate capability, and the lithium ion battery has all characteristics and advantages of the cobalt-free lamellar cathode material or the cathode piece and are not described repeatedly herein.

According to the embodiments of the present disclosure, the lithium ion battery meets at least one of following conditions: under a condition of 0.1C charge and discharge rate, the first time specific charge capacity is not lower than 205.1 mAh/g; under a condition of 0.1C charge and discharge rate, the first time specific discharge capacity is not lower than 181.9 mAh/g; under a condition of 0.1C charge and discharge rate, the first time charge discharge efficiency is not lower than 88.7%; under a condition of 1C charge and discharge rate, the capacity retention ratio of the lithium ion battery is not lower than 98.3% after 50 times of charge-discharge cycles; under a condition of 0.5C charge and discharge rate, the first time specific discharge capacity is not lower than 170.2 mAh/g; under a condition of 1C charge and discharge rate, the first time specific discharge capacity is not lower than 155.7 mAh/g; under a condition of 3C charge and discharge rate, the first time specific discharge capacity is not lower than 149.7 mAh/g; and under a condition of 4C charge and discharge rate, the first time specific discharge capacity is not lower than 145.1 mAh/g.

### Brief Description of the Drawings

Drawings of the description constituting a portion of the present application are used to provide a further understanding to the prevent disclosure; and schematic examples and its specification of the prevent disclosure are intended for explaining the prevent disclosure, and should not be construed to unduly limit this disclosure. In the drawings:
Fig. 1 shows a flow schematic diagram of the method for preparing the cobalt-free lamellar cathode material according to an embodiment of the present disclosure;
Fig. 2 shows a flow schematic diagram of the step of providing the LiNiₓMn_{y}O₂ crystal according to an embodiment of the present disclosure.
Fig.3 shows a scanning electron micrograph of the LiNiₓMn_{y}O₂ crystal in the embodiment 1 and embodiment 2 of the present disclosure (the measuring scale in the fig a is 2µm, and the measuring scale in the fig b is 200 mn).
Fig.4 shows a scanning electron micrograph of the cobalt-free lamellar cathode material in the embodiment 1 of the present disclosure (the measuring scale in the fig a is 2µm, and the measuring scale in the fig b is 200 mn).
Fig.5 shows a scanning electron micrograph of the cobalt-free lamellar cathode material in the embodiment 2 of the present disclosure (the measuring scale in the fig a is 2µm, and the measuring scale in the fig b is 200 mn).
Fig. 6 shows first time charge and discharge curves of the lithium ion batteries in the embodiment 1, embodiment 2 and comparative example 1 of the present disclosure (the curve a is the first time charge and discharge curve of the lithium ion battery in the embodiment 1, the curve b is the first time charge and discharge curve of the lithium ion battery in the embodiment 2, and the curve c is the first time charge and discharge curve of the lithium ion battery in the comparative example 1).
Fig. 7 shows cycle performance test results of the lithium ion batteries in the embodiment 1, embodiment 2 and comparative example 1 of the present disclosure.

### Detailed Description of the Embodiments

It should be noted that the description below is merely used for explaining the present disclosure and cannot be construed as limitation to the present disclosure. The embodiments without specific technologies or conditions indicated are carried out according to technologies or conditions described by literature in the field or description of a product. The used reagents or instruments not indicated by manufacturers are conventional products which can be purchased in the market.

In an aspect of the present disclosure, the present disclosure provides a cobalt-free lamellar cathode material for a lithium ion battery. According to the embodiments of the present disclosure, the cobalt-free lamellar cathode material includes a LiNi_{0.75}Mn_{0.25}O₂ crystal; and a lithium ion conductor, the lithium ion conductor being attached to at least part of a surface of the LiNi_{0.75}Mn_{0.25}O₂ crystal, the lithium ion conductor including at least one of lithium titanate or lithium manganate, and a mass percentage of the lithium ion conductor being 0.1-2% based on a total mass of the cobalt-free lamellar cathode material, a specific surface area of the cobalt-free lamellar cathode material being 0.1-0.8m²/g and a D₅₀ particle size of the cobalt-free lamellar cathode material being 1-10µm. The inventors find that the cobalt-free lamellar cathode material has the advantages of low cost, low surface impedance and good conductivity. Lithium ions have high diffusion velocity and electrochemical activity in the cobalt-free lamellar cathode material. A lithium ion battery manufactured by the cobalt-free lamellar cathode material has the advantages of high charge specific capacity, high discharge specific capacity, high first effect, good cycle performance and good rate capability.

In another aspect of the present disclosure, the present disclosure provides a cobalt-free lamellar cathode material for a lithium ion battery. According to the embodiments of the present disclosure, the cobalt-free lamellar cathode material includes a LiNiₓMn_{y}O₂ crystal, wherein x+y=1, 0.55≤x≤0.95, 0.05≤y≤0.45; and a lithium ion conductor, the lithium ion conductor being attached to at least part of a surface of the LiNiₓMn_{y}O₂ crystal. The inventors find that the cobalt-free lamellar cathode material has the advantages of low cost, low surface impedance and good conductivity. Lithium ions have high diffusion velocity and electrochemical activity in the cobalt-free lamellar cathode material. A lithium ion battery manufactured by the cobalt-free lamellar cathode material has the advantages of high charge specific capacity, high discharge specific capacity, high first effect, good cycle performance and good rate capability.

According to the embodiments of the present disclosure, the x can be 0.75 specifically. Correspondingly, the y can be 0.25 specifically. Those skilled in the art can select values of the x and y according to actual needs. Further, in some embodiments of the present disclosure, a chemical formula of the LiNiₓMn_{y}O₂ crystal is LiNi_{0.75}Mn_{0.25}O₂. The inventors find that when the LiNiₓMn_{y}O₂ crystal has the chemical composition, compared with LiNiₓMn_{y}O₂ crystals with other chemical compositions, the lithium ion crystal is attached to at least part of the surface, such that the surface impedance of the cobalt-free lamellar cathode material is reduced obviously and the conductivity is improved obviously.

According to the embodiments of the present disclosure, the mass percent of the LiNiₓMn_{y}O₂ crystal is 98-99.5% based on the total mass of the cobalt-free lamellar cathode material. Specifically, in some embodiments of the present disclosure, the mass percent of the LiNiₓMn_{y}O₂ crystal can 99.3% specifically. The mass percent of the LiNiₓMn_{y}O₂ crystal is within the range, such that the cobalt-free lamellar cathode material has higher electrochemical activity and is suitable for being used in the lithium ion battery.

According to the embodiments of the present disclosure, further, the inventors conducting deep investigation and massive experiment verification on specific types of the lithium ion conductor find that the specific types of the lithium ion conductor can include lithium titanate or lithium manganate and the like. When the lithium ion conductor is lithium titanate or lithium manganate, the cobalt-free lamellar cathode material is lower in surface impedance, better in conductivity and higher in electrochemical activity.

According to the embodiments of the present disclosure, specifically, the lithium ion conductor can be lithium titanate, and a mass percent of lithium titanate is 0.1-1% based on the total mass of the cobalt-free lamellar cathode material. Specifically, in some embodiments of the present disclosure, the mass percent of lithium titanate can be 0.1%, 0.2%, 0.3%, 0.4%, 0.5%, 0.6%, 0.7%, 0.8%, 0.9% or 1% and the like. Thus, the mass percent of lithium titanate in the cobalt-free lamellar cathode material is within the range, which either avoids a situation that the conductivity of the cobalt-free lamellar cathode material as a result of lower content of lithium titanate or avoids a situation that the diffusion velocity of lithium ions in the cobalt-free lamellar cathode material are low as a result of excessive content of lithium titanate.

According to the embodiments of the present disclosure, in addition, the lithium ion conductor further can be lithium manganate, and a mass percent of lithium manganate is 0.1-2% based on the total mass of the cobalt-free lamellar cathode material. Specifically, in some embodiments of the present disclosure, the mass percent of lithium manganate can be 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9% or 2% and the like. Thus, the mass percent of lithium manganate in the cobalt-free lamellar cathode material is within the range, which either avoids a situation that the conductivity of the cobalt-free lamellar cathode material as a result of lower content of lithium manganate or avoids a situation that the diffusion velocity of lithium ions in the cobalt-free lamellar cathode material are low as a result of excessive content of lithium manganate.

According to the embodiments of the present disclosure, the specific surface area of the cobalt-free lamellar cathode material is 0.1-0.8m²/g. Specifically, in some embodiments of the present disclosure, the specific surface area of the cobalt-free lamellar cathode material can be 0.1 m²/g, 0.2 m²/g, 0.3 m²/g, 0.4 m²/g, 0.5 m²/g, 0.6 m²/g, 0.7 m²/g or 0.8 m²/g and the like. The cobalt-free lamellar cathode material has the specific surface area in the range, such that the diffusion velocity of the lithium ions in the cobalt-free lamellar cathode material is higher, and therefore, the cobalt-free lamellar cathode material is higher in electrochemical activity.

According to some embodiments of the present disclosure, the D₅₀ particle size of the cobalt-free lamellar cathode material can be 1-10 µm. Specifically, in some embodiments of the present disclosure, the particle size of the cobalt-free lamellar cathode material can be 1 µm, 2 µm, 3 µm, 4 µm, 5 µm, 6 µm, 7 µm, 8 µm, 9 µm or 10 µm and the like. The inventors find that when the D₅₀ particle size of the cobalt-free lamellar cathode material is within the range, the cobalt-free lamellar cathode material is better in electrochemical activity, such that the lithium ion battery manufactured by the cobalt-free lamellar cathode material is better in performance in all aspect.

According to the embodiment of the present disclosure, the cobalt-free lamellar cathode material is alkaline. In some embodiments of the present disclosure, the pH of the cobalt-free lamellar cathode material is greater than or equal to 11 but less than or equal to 12. Thus, the cobalt-free lamellar cathode material is further suitable for a cathode of the lithium ion battery.

According to the embodiments of the present disclosure, it can be understood that the cobalt-free lamellar cathode material further contains a certain amount of impurities inevitably. The impurities may be alkali left in a preparation process of the cobalt-free lamellar cathode material or alkali slowly generated as the cobalt-free lamellar cathode material is placed in air. Based on the total mass of the cobalt-free lamellar cathode material, the mass percent of the impurities is less than or equal to 0.5%. Those skilled in the art can understand that it does not affect performance of the cobalt-free lamellar cathode material, and it is not described in detail herein.

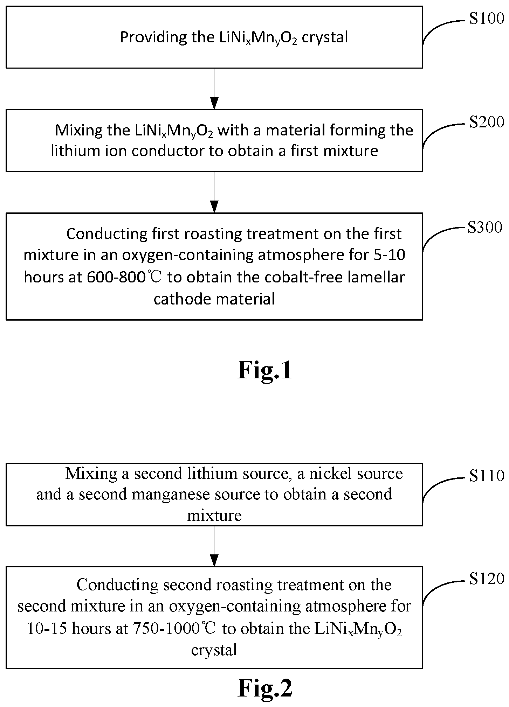

In another aspect of the present disclosure, the present disclosure provides a method for preparing the cobalt-free lamellar cathode material. According to the embodiments of the present disclosure, referring to the Fig. 1, the method includes the following steps:
S100: the LiNiₓMn_{y}O₂ crystal is provided.

According to the embodiments of the present disclosure, specifically, referring to the Fig. 2, the LiNiₓMn_{y}O₂ crystal is provided by the following steps:
S110: a second lithium source, a nickel source and a second manganese source are mixed to obtain a second mixture.

According to the embodiment of the present disclosure, specifically, the second lithium source can include LiOH, Li₂CO₃, CH₃COOLi or LiNO₃. Thus, the material is wide in source, easy to obtain and lower in cost, and can provide the lithium source better to form the LiNiₓMn_{y}O₂ crystal.

According to the embodiment of the present disclosure, specifically, the nickel source can include NiₐMn_{b}(OH)₂, wherein 0.55≤a≤0.95, 0.05≤b≤0.45. Specifically, the a can be 0.55, 0.65, 0.75, 0.85 or 0.95 and the like, and the b can be 0.05, 0.15, 0.25, 0.35 or 0.45 and the like. Thus, the material is wide in source, easy to obtain and lower in cost, and can provide the nickel source better to form the LiNiₓMn_{y}O₂ crystal.

According to the embodiment of the present disclosure, specifically, the manganese source can include NiₐMn_{b}(OH)₂, wherein a is greater than or equal to 0.55 but less than or equal to 0.95 and b is greater than or equal to 0.05 but less than or equal to 0.45. Specifically, the a can be 0.55, 0.65, 0.75, 0.85 or 0.95 and the like, and the b can be 0.05, 0.15, 0.25, 0.35 or 0.45 and the like. Thus, the material is wide in source, easy to obtain and lower in cost, and can provide the manganese source better to form the LiNiₓMn_{y}O₂ crystal.

According to the embodiments of the present disclosure, those skilled in the art can understand that when both the nickel source and the second manganese source are NiₐMn_{b}(OH)₂, the nickel source and the second manganese source can be added into the system simultaneously to obtain the second mixture. Thus, the method is easy and convenient to operate, easy to realize and easy for industrial production.

According to the embodiments of the present disclosure, specifically, when the raw materials are mixed, the raw materials are mixed by adopting the high speed mixing apparatus, the rotating speed of the high speed mixing apparatus can be 800-900 rpm/min, specifically 800 rpm/min, 820 rpm/min, 840 rpm/min, 860 rpm/min, 880 rpm/min, 900 rpm/min and the like, and the mixing time can be 5-20 min, specicially 5 min, 10 min, 15 min or 20 min and the like. Thus, the mixing effect is excellent.

S120: second roasting treatment is conducted on the second mixture in an oxygen-containing atmosphere for 10-15 hours at 750-950°C to obtain the LiNiₓMn_{y}O₂ crystal.

According to the embodiments of the present disclosure, the temperature of the second roasting treatment can be specifically 750°C, 800°C, 850°C, 900°C, 950°C, 1000°C and the like. Thus, the temperature range is relatively proper for better roasting treatment, such that the LiNiₓMn_{y}O₂ crystal is prepared effectively.

According to the embodiments of the present disclosure, the time of the second roasting treatment can be specifically 10 hours, 11 hours, 12 hours, 13 hours, 14 hours or 15 hours and the like. Thus, the time range is relatively proper for better roasting treatment, such that the LiNiₓMn_{y}O₂ crystal is prepared effectively.

According to the embodiments of the present disclosure, in the oxygen-containing atmosphere, a volume fraction of oxygen is greater than 90%, specifically 91%, 92%, 93%, 94%, 95%, 96%, 97%, 98% or 99% and the like. Thus, roasting treatment can be conducted better, such that the LiNiₓMn_{y}O₂ crystal is prepared effectively.

According to the embodiments of the present disclosure, those skilled in the art can understand that the obtained LiNiₓMn_{y}O₂ crystal can be further crushed and sieved. The crushing treatment can include a conventional crushing treatment manner in the related art, for example, double roller crushing, mechanical crushing or air flow crushing; and the sieving treatment can be sieving by a 300-400 mesh sieve to remove impurity particles with large grain sizes, and the specific process is not described in detail herein.

S200: the LiNiₓMn_{y}O₂ crystal is mixed with a material forming the lithium ion conductor to obtain a first mixture.

According to the embodiments of the present disclosure, specifically, the material forming the lithium ion conductor includes a first lithium source; and at least one of a titanium source or a first manganese source. In some embodiments of the present disclosure, when the prepared lithium ion conductor is lithium titanate, the titanium source can specifically include tetrabutyl titanate or titanium oxide. In some other embodiments of the present disclosure, when the prepared lithium ion conductor is lithium manganate, the first manganese source can specifically include manganese carbonate, manganese acetate or manganese oxide and the like. In addition, in some embodiments of the present disclosure, the first lithium source can include LiOH, Li₂CO₃, CH₃COOLi or LiNO₃ and the like. Thus, the material is wide in source, easy to obtain and lower in cost, and the cobalt-free lamellar cathode material can be prepared effectively.

According to the embodiments of the present disclosure, further, when the LiNiₓMn_{y}O₂ crystal is mixed with the material forming the lithium ion conductor, a molar ratio of the LiNiₓMn_{y}O₂ crystal to the first lithium source and the titanium source of the first manganese source is (4-1): 1, specifically 3: 1 and 2: 1. Thus, the cobalt-free lamellar cathode material with better performance can be prepared effectively by means of the feed ratio, which either avoids a situation that the conductivity of the cobalt-free lamellar cathode material as a result of lower content of lithium ion conductor or avoids a situation that the diffusion velocity of lithium ions in the cobalt-free lamellar cathode material are low as a result of excessive content of lithium ion conductor.

S300: first roasting treatment is conducted on the first mixture in an oxygen-containing atmosphere for 5-10 hours at 600-800°C to obtain the cobalt-free lamellar cathode material.

According to the embodiments of the present disclosure, the temperature of the first roasting treatment can be specifically 600 °C, 650 °C, 700 °C, 750 °C or 800 °C and the like. Thus, the temperature range is relatively proper for better roasting treatment, such that the cobalt-free lamellar cathode material is prepared effectively.

According to the embodiments of the present disclosure, the time of the first roasting treatment can be specifically 5 hours, 6 hours, 7 hours, 8 hours, 9 hours or 10 hours and the like. Thus, the time range is relatively proper for better roasting treatment, such that the cobalt-free lamellar cathode material is prepared effectively.

According to the embodiments of the present disclosure, in the oxygen-containing atmosphere, a volume fraction of oxygen is greater than 90%, specifically 91%, 92%, 93%, 94%, 95%, 96%, 97%, 98% or 99% and the like. Thus, roasting treatment can be conducted better, such that the cobalt-free lamellar cathode material is prepared effectively.

According to the embodiments of the present disclosure, those skilled in the art can understand that the obtained cobalt-free lamellar cathode material can be further crushed and sieved. The sieving treatment can be sieving by a 300-400 mesh sieve to remove impurity particles with large grain sizes, and the specific process is not described in detail herein.

In another aspect of the present disclosure, the present disclosure provides a cathode piece. According to the embodiment of the present disclosure, the cathode piece includes the cobalt-free lamellar cathode material. The inventors find that the cathode piece has the advantages of low cost and good conductivity, the lithium ion battery manufactured by the cathode piece has the advantages of high specific charge capacity, high specific discharge capacity, high first efficiency, good cycle performance and good rate capability, and the cathode piece has all characteristics and advantages of the cobalt-free lamellar cathode material and are not described repeatedly herein.

According to the embodiments of the present disclosure, besides the cobalt-free lamellar cathode material, those skilled in the art can understand that the cathode piece further can include other components of a conventional cathode piece, for example, a substrate, a conductive agent, a binder, a thickeners and the like, and it is not described in detail herein.

In the lithium ion battery, the anode, the battery diaphragm, the electrolyte and the like can be common types in the field, for example, the battery diaphragm can be a polypropylene microporous film (Celgard 2400), and the electrolyte component can be LiPF₆ (lithium Hexafluorophosphate)/EC (ethylene carbonate)-DMC (dimethyl carbonate).

In yet another aspect of the present disclosure, the present disclosure provides a lithium ion battery. According to the embodiments of the present disclosure, the lithium ion battery includes an anode, a cathode, a battery diaphragm and an electrolyte, wherein the cathode includes the cobalt-free lamellar cathode material or the cathode piece. The inventors find that the lithium ion battery has the advantages of high specific charge capacity, high specific discharge capacity, high first efficiency, good cycle performance and good rate capability, and the lithium ion battery has all characteristics and advantages of the cobalt-free lamellar cathode material or the cathode piece and are not described repeatedly herein.

According to the embodiments of the present disclosure, the first charge specific capacity is not lower than 205.1 mAh/g under a condition of 0.1C charge-discharge rate. Thus, the charge specific capacity of the lithium ion battery is high.

According to the embodiments of the present disclosure, the first discharge specific capacity is not lower than 181.9 mAh/g under a condition of 0.1C charge-discharge rate. Thus, the discharge specific capacity of the lithium ion battery is high.

According to the embodiments of the present disclosure, the first charge and discharge specific capacity is not lower than 88.7% under a condition of 0.1C charge-discharge rate. Thus, the first effect of the lithium ion battery is high.

According to the embodiments of the present disclosure, the capacity retention ratio of the lithium ion battery is not lower than 98.3% after 50 times of charge-discharge cycles under a condition of 1C charge-discharge rate. Thus, the cycle performance of the lithium ion battery is good.

According to the embodiments of the present disclosure, for the lithium ion battery, under a condition of 0.5C charge and discharge rate, the first time specific discharge capacity is not lower than 170.2 mAh/g; under a condition of 1C charge and discharge rate, the first time specific discharge capacity is not lower than 155.7 mAh/g; under a condition of 3C charge and discharge rate, the first time specific discharge capacity is not lower than 149.7 mAh/g; and under a condition of 4C charge and discharge rate, the first time specific discharge capacity is not lower than 145.1 mAh/g. Thus, the rate capability of the lithium ion battery is good.

According to the embodiments of the present disclosure, besides the structures, shapes, configurations, manufacturing processes and the like of other structures and components of the lithium ion battery can be conventional shapes, configurations and manufacturing processes, and are not described in detail herein.

Detail description on the embodiments of the present disclosure will be made below.

### Example 1

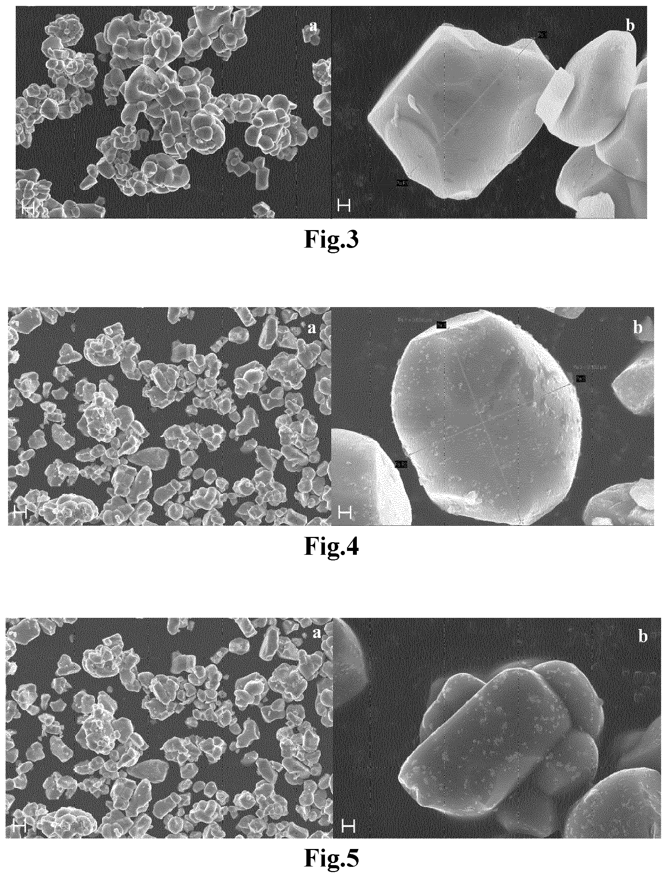

The cobalt-free lamellar cathode material includes:
a LiNi_{0.75}Mn_{0.25}O₂ crystal (the scanning electron micrograph refers to the Fig. 3); and a lithium ion conductor, the lithium ion conductor being attached to at least part of a surface of the LiNi_{0.75}Mn_{0.25}O₂ crystal, the lithium ion conductor being lithium titanate, and a mass percentage of the lithium titanate being 0.2% based on a total mass of the cobalt-free lamellar cathode material, a specific surface area of the cobalt-free lamellar cathode material being 0.7 m²/g and a particle size of the cobalt-free lamellar cathode material being 3 µm.

The method for preparing the cobalt-free lamellar cathode material includes the specific steps:
S1, 47.40g of LiOH and 100g of precursor Ni_{0.75}Mn_{0.25}(OH)₂ are mixed by adopting the high speed mixing apparatus, wherein the mixing time is 10 min and the rotating speed is 800 rpm; a reaction is carried out on the mixed materials in an oxygen atmosphere (the concentration is greater than or equal to 90%), wherein the reaction temperature is 930°C, the reaction time is 10 hours, and after reaction, natural cooling is conducted and the mixture is sieved by the 400-mesh sieve to obtain the lamellar nickel lithium manganate of monocrystal morphology; and
S2, 100g of the nickel lithium manganate obtained in the S1 and 0.07 g of LiOH and 0.17g of TiO₂ are mixed uniformly in a high speed mixer to obtain a pre-mixture; then a reaction is conducted on the pre-mixture for 5 hours at 700 °C, wherein the concentration of oxygen in the reaction atmosphere is 90%, and after reaction, natural cooling is conducted and the mixture is sieved by the 400-mesh sieve to obtain the cobalt-free lamellar cathode material, wherein the mass percent of lithium titanate in the cobalt-free lamellar cathode material is 0.2%.

The scanning electron micrograph of the cobalt-free lamellar cathode material refers to the Fig. 4. It can be known from the Fig. 3 and Fig. 4 that lithium titanate is attached to at least part of surface of the cobalt-free lamellar cathode material. The surface of the LiNi_{0.75}Mn_{0.25}O₂ crystal is relatively smooth, and other materials are not attached to the surface.

The cobalt-free lamellar cathode material is homogenated and coated to manufacture the cathode piece and is then assembled as the lithium ion battery, and the anode is a metal lithium piece; the battery diaphragm is a Celgard2400 microporous polypropylene film; and the electrolyte is LiPF₆ (lithium Hexafluorophosphate)/EC (ethylene carbonate)-DMC (dimethyl carbonate), and a battery model is R2032, similarly hereinafter.

### Example 2

The cobalt-free lamellar cathode material includes:
a LiNi_{0.75}Mn_{0.25}O₂ crystal (the scanning electron micrograph refers to the Fig. 3); and a lithium ion conductor, the lithium ion conductor being attached to at least part of a surface of the LiNi_{0.75}Mn_{0.25}O₂ crystal, the lithium ion conductor being lithium manganate, and a mass percentage of the lithium manganate being 0.15% based on a total mass of the cobalt-free lamellar cathode material, a specific surface area of the cobalt-free lamellar cathode material being 0.7 m²/g and a particle size of the cobalt-free lamellar cathode material being 3 µm.

The method for preparing the cobalt-free lamellar cathode material includes the specific steps:
S1; same with the example 1;
S2, 100g of the nickel lithium manganate obtained in the S1 and 0.035g of LiOH and 0.14g of MnO₂ are mixed uniformly in a high speed mixer to obtain a pre-mixture; then a reaction is conducted on the pre-mixture for 5 hours at 700 °C, wherein the concentration of oxygen in the reaction atmosphere is 90%, and after reaction, natural cooling is conducted and the mixture is sieved by the 400-mesh sieve to obtain the cobalt-free lamellar cathode material, wherein the mass percent of lithium titanate in the cobalt-free lamellar cathode material is 0.15%.

The scanning electron micrograph of the cobalt-free lamellar cathode material refers to the Fig. 5. It can be known from the Fig. 3 and Fig. 5 that lithium manganate is attached to at least part of surface of the cobalt-free lamellar cathode material. The surface of the LiNi_{0.75}Mn_{0.25}O₂ crystal is relatively smooth, and other materials are not attached to the surface.

The lithium ion battery is obtained according to the method same as that in the example 1.

### Example 3

a LiNi_{0.75}Mn_{0.25}O₂ crystal, and a lithium ion conductor, the lithium ion conductor being attached to at least part of a surface of the LiNi_{0.75}Mn_{0.25}O₂ crystal, the lithium ion conductor being lithium titanate, and a mass percentage of the lithium titanate being 0.1% based on a total mass of the cobalt-free lamellar cathode material, a specific surface area of the cobalt-free lamellar cathode material being 0.1 m²/g and a particle size of the cobalt-free lamellar cathode material being 10 µm.
S1, 47.40g of LiOH and 100g of precursor Ni_{0.75}Mn_{0.25}(OH)₂ are mixed by adopting the high speed mixing apparatus, wherein the mixing time is 10 min and the rotating speed is 800 rpm; a reaction is carried out on the mixed materials in an oxygen atmosphere (the concentration is greater than or equal to 90%), wherein the reaction temperature is 1000°C, the reaction time is 15 hours, and after reaction, natural cooling is conducted and the mixture is sieved by the 400 mesh sieve to obtain the lamellar nickel lithium manganate of monocrystal morphology; and
S2, 100g of the nickel lithium manganate obtained in the S1 and 0.035g of LiOH and 0.085g of TiO₂ are mixed uniformly in a high speed mixer to obtain a pre-mixture; then a reaction is conducted on the pre-mixture for 5 hours at 700 °C, wherein the concentration of oxygen in the reaction atmosphere is 90%, and after reaction, natural cooling is conducted and the mixture is sieved by the 400 mesh sieve to obtain the cobalt-free lamellar cathode material, wherein the mass percent of lithium titanate in the cobalt-free lamellar cathode material is 0.1%.

### Example 4

a LiNi_{0.75}Mn_{0.25}O₂ crystal, and a lithium ion conductor, the lithium ion conductor being attached to at least part of a surface of the LiNi_{0.75}Mn_{0.25}O₂ crystal, the lithium ion conductor being lithium titanate, and a mass percentage of the lithium titanate being 2.0% based on a total mass of the cobalt-free lamellar cathode material, a specific surface area of the cobalt-free lamellar cathode material being 0.8 m²/g and a particle size of the cobalt-free lamellar cathode material being 1 µm .
S1, 47.40g of LiOH and 100g of precursor Ni_{0.75}Mn_{0.25}(OH)₂ are mixed by adopting the high speed mixing apparatus, wherein the mixing time is 10 min and the rotating speed is 800 rpm; a reaction is carried out on the mixed materials in an oxygen atmosphere (the concentration is greater than or equal to 90%), wherein the reaction temperature is 880°C, the reaction time is 20 hours, and after reaction, natural cooling is conducted and the mixture is sieved by the 400-mesh sieve to obtain the lamellar nickel lithium manganate of monocrystal morphology; and
S2, 100g of the nickel lithium manganate obtained in the S1 and 0.7g of LiOH and 1.7g of TiO₂ are mixed uniformly in a high speed mixer to obtain a pre-mixture; then a reaction is conducted on the pre-mixture for 5 hours at 700 °C, wherein the concentration of oxygen in the reaction atmosphere is 90%, and after reaction, natural cooling is conducted and the mixture is sieved by the 400 mesh sieve to obtain the cobalt-free lamellar cathode material, wherein the mass percent of lithium titanate in the cobalt-free lamellar cathode material is 2.0%.

### Example 5

a LiNi_{0.75}Mn_{0.25}O₂ crystal, and a lithium ion conductor, the lithium ion conductor being attached to at least part of a surface of the LiNi_{0.75}Mn_{0.25}O₂ crystal, the lithium ion conductor being lithium titanate, and a mass percentage of the lithium titanate being 3.0% based on a total mass of the cobalt-free lamellar cathode material, a specific surface area of the cobalt-free lamellar cathode material being 1.0 m²/g and a particle size of the cobalt-free lamellar cathode material being 0.5 µm.
S1, 47.40g of LiOH and 100g of precursor Ni_{0.75}Mn_{0.25}(OH)₂ are mixed by adopting the high speed mixing apparatus, wherein the mixing time is 10 min and the rotating speed is 800 rpm; a reaction is carried out on the mixed materials in an oxygen atmosphere (the concentration is greater than or equal to 90%), wherein the reaction temperature is 850°C, the reaction time is 10 hours, and after reaction, natural cooling is conducted and the mixture is sieved by the 400 mesh sieve to obtain the lamellar nickel lithium manganate of monocrystal morphology;
S2, 100g of the nickel lithium manganate obtained in the S1 and 1.05g of LiOH and 2.55g of TiO₂ are mixed uniformly in a high speed mixer to obtain a pre-mixture; then a reaction is conducted on the pre-mixture for 5 hours at 700 °C, wherein the concentration of oxygen in the reaction atmosphere is 90%, and after reaction, natural cooling is conducted and the mixture is sieved by the 400 mesh sieve to obtain the cobalt-free lamellar cathode material, wherein the mass percent of lithium titanate in the cobalt-free lamellar cathode material is 3.0%.

### Example 6

a LiNi_{0.55}Mn_{0.45}O₂ crystal, and a lithium ion conductor, the lithium ion conductor being attached to at least part of a surface of the LiNi_{0.55}Mn_{0.45}O₂ crystal, the lithium ion conductor being lithium titanate, and a mass percentage of the lithium titanate being 0.2% based on a total mass of the cobalt-free lamellar cathode material, a specific surface area of the cobalt-free lamellar cathode material being 0.7 m²/g and a particle size of the cobalt-free lamellar cathode material being 3 µm.

The method for preparing the cobalt-free lamellar cathode material includes the specific steps:
S1, 47.0g of LiOH and 100g of precursor Ni_{0.55}Mn_{0.45}(OH)₂ are mixed by adopting the high speed mixing apparatus, wherein the mixing time is 10 min and the rotating speed is 800 rpm; a reaction is carried out on the mixed materials in an oxygen atmosphere (the concentration is greater than or equal to 90%), wherein the reaction temperature is 980°C, the reaction time is 10 hours, and after reaction, natural cooling is conducted and the mixture is sieved by the 400 mesh sieve to obtain the lamellar nickel lithium manganate of monocrystal morphology; and

### S2; same with the example 1.

### Example 7

a LiNi_{0.95}Mn_{0.05}O₂ crystal, and a lithium ion conductor, the lithium ion conductor being attached to at least part of a surface of the LiNi_{0.95}Mn_{0.05}O₂ crystal, the lithium ion conductor being lithium titanate, and a mass percentage of the lithium titanate being 0.2% based on a total mass of the cobalt-free lamellar cathode material, a specific surface area of the cobalt-free lamellar cathode material being 0.7 m²/g and a particle size of the cobalt-free lamellar cathode material being 3 µm.

The method for preparing the cobalt-free lamellar cathode material includes the specific steps:
S1, 47.80g of LiOH and 100g of precursor Ni_{0.95}Mn_{0.05}(OH)₂ are mixed by adopting the high speed mixing apparatus, wherein the mixing time is 10 min and the rotating speed is 800 rpm; a reaction is carried out on the mixed materials in an oxygen atmosphere (the concentration is greater than or equal to 90%), wherein the reaction temperature is 800°C, the reaction time is 10 hours, and after reaction, natural cooling is conducted and the mixture is sieved by the 400 mesh sieve to obtain the lamellar nickel lithium manganate of monocrystal morphology; and
S2; same with the example 1;

### Comparative example 1

The cobalt-free lamellar cathode material includes a LiNi_{0.55}Mn_{0.45}O₂ crystal. The specific surface area of the cobalt-free lamellar cathode material is 0.7 m²/g, and a particle size of the cobalt-free lamellar cathode material is 3 µm.

S1; same with the example 6.

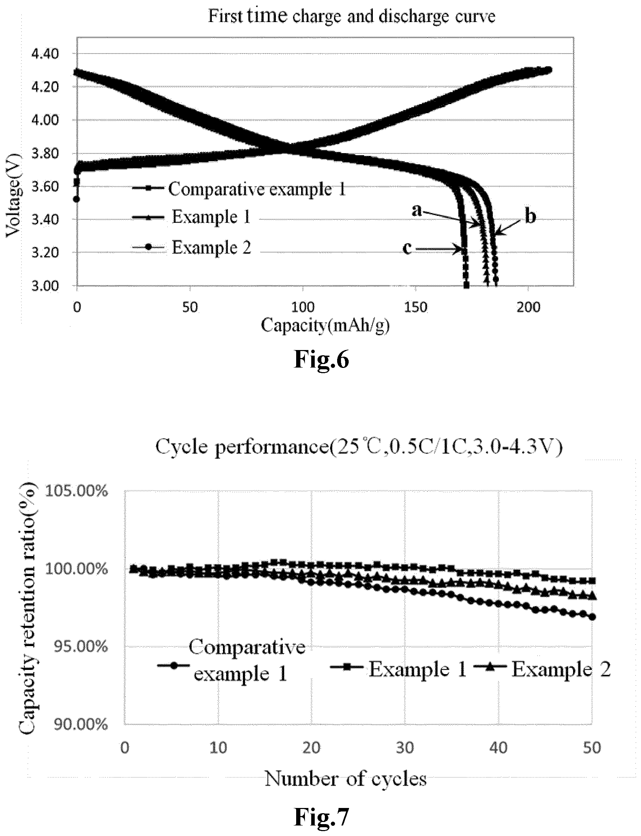

Performance test results:
The first time charge and discharge curves of the lithium ion batteries in the embodiment 1, embodiment 2 and comparative example 1 refer to the Fig. 6. It can be known from the Fig. 6 that under a condition of 0.1C charge and discharge rate, the first time charge and discharge specific capacities of the lithium ion battery in the comparative example 1 are 200.7 mAh/g and 172.5 mAh/g and the first time efficiency is 85.9%; under a condition of 0.1C charge and discharge rate, the first time specific charge and discharge capacities of the lithium ion battery in the embodiment 1 are 205.1 mAh/g and 181.9 mAh/g, and the first time efficiency is 88.7%; and under a condition of 0.1C charge and discharge rate, the first time specific charge and discharge capacities of the lithium ion battery in the embodiment 2 are 209.1 mAh/g and 185.7 mAh/g and the first time efficiency is 88.9%. Thus, the lithium ion battery manufactured by the cobalt-free lamellar cathode material of the present disclosure is high in specific charge capacity, high specific discharge capacity and high first time efficiency.
(2) the cycle performance test results of the lithium ion batteries in the embodiment 1, the embodiment 2 and the comparative example 1 refer to the Fig. 7, wherein during test, the temperature is 25 °C, the charge ratio is 0.5C, the discharge ratio is 1C and the potential range is 3.0-4.3V. It can be known from the Fig. 7 that under a condition of 1C charge and discharge rate, the capacity retention ratio of the lithium ion battery in the comparative example 1 after 50 times of charge and discharge cycles is only 96.9%; under a condition of 1C charge and discharge rate, the capacity retention ratio of the lithium ion battery in the embodiment 1 after 50 times of charge and discharge cycles is 99.2%; and under a condition of 1C charge and discharge rate, the capacity retention ratio of the lithium ion battery in the embodiment 2 after 50 times of charge and discharge cycles is 98.3%. Under a condition of 1C charge and discharge rate, the capacity retention ratio of the lithium ion battery in the embodiment 2 after 50 times of charge and discharge cycles is 98.3%; under a condition of 1C charge and discharge rate, the capacity retention ratio of the lithium ion battery in the embodiment 3 after 50 times of charge and discharge cycles is 97.6%; under a condition of 1C charge and discharge rate, the capacity retention ratio of the lithium ion battery in the embodiment 4 after 50 times of charge and discharge cycles is 98.9%; under a condition of 1C charge and discharge rate, the capacity retention ratio of the lithium ion battery in the embodiment 5 after 50 times of charge and discharge cycles is 96.3%; under a condition of 1C charge and discharge rate, the capacity retention ratio of the lithium ion battery in the embodiment 5 after 50 times of charge and discharge cycles is 97.5%; under a condition of 1C charge and discharge rate, the capacity retention ratio of the lithium ion battery in the embodiment 7 after 50 times of charge and discharge cycles is 95.1%. Thus, the cobalt-free lamellar cathode material is good in cycle performance.
(3) rate capability test results of the lithium ion batteries in the embodiment 1, embodiment 2 and comparative example 1 of the present disclosure Table 1 refer to the table 1. It can be known from the table 1 that compared with the comparative example 1, the rate capabilities in the embodiment 1 and the embodiment 2 are improved obviously. For example, under a condition of 1C charge and discharge rate, the specific discharge capacity of the comparative example 1 is only 155.3 mAh/g, and the specific discharge capacity of the embodiment 1 is 164.8 mAh/g; and under a condition of 4C charge and discharge rate, the specific discharge capacity of the comparative example 1 is only 136.3 mAh/g, the specific discharge capacity of the embodiment 1 is only 145.1 mAh/g, and the specific discharge capacity of the embodiment 2 is only 147.4 mAh/g. Thus, the cobalt-free lamellar cathode material is good in rate capability. Rate capability test results of the lithium ion batteries in the rest embodiments are shown in the following table 1.

**Table 1**

| Samples | 0.5C | 1C | 2C | 3C | 4C |
|---|---|---|---|---|---|
| Comparative example 1 | 150.7 mAh/g | 145.3 mAh/g | 136.6 mAh/g | 130.8 mAh/g | 126.3 mAh/g |
| Example 1 | 170.2 mAh/g | 164.8 mAh/g | 155.7 mAh/g | 149.7 mAh/g | 141.5 mAh/g |
| Example 2 | 171.4 mAh/g | 165.9 mAh/g | 156.8 mAh/g | 151.7 mAh/g | 147.4 mAh/g |
| Example 3 | 165.3 mAh/g | 160.7 mAh/g | 151.6 mAh/g | 146.2 mAh/g | 138.5 mAh/g |
| Example 4 | 168.4 mAh/g | 162.6 mAh/g | 153.5 mAh/g | 147.7 mAh/g | 139.4 mAh/g |
| Example 5 | 166.2 mAh/g | 160.9 mAh/g | 151.4 mAh/g | 145.4 mAh/g | 137.5 mAh/g |
| Example 6 | 156.4 mAh/g | 150.7 mAh/g | 145.8 mAh/g | 138.2 mAh/g | 127.6 mAh/g |
| Example 7 | 191.4 mAh/g | 183.6 mAh/g | 175.0 mAh/g | 170.9 mAh/g | 161.8 mAh/g |

In description of the present disclosure, it should be understood that terms 'first' and 'second' are only used for a description purpose rather than being construed to indicate or imply relative importance or implicitly indicate the quantity of indicated technical features. Thus, features defining 'first' and 'second' can expressively or implicitly include one or more features. In the description of the present disclosure, "a plurality of' means two or more, unless otherwise specifically defined.

In the description of this specification, descriptions with reference to the terms, such as "one embodiment", "some embodiments", "examples", "specific examples", or "some examples", mean that the specific features, structures, materials or characteristics described in conjunction with the embodiments or examples are included in at least one embodiment or example of the present disclosure. In the present specification, the schematic representation of the above terms does not necessarily mean the same embodiment or example. Furthermore, the particular features, structures, materials, or characteristics described may be combined in a suitable manner in any one or more embodiments or examples. In addition, various embodiments or examples described in the specification, as well as features of various embodiments or examples, may be combined and combined by those skilled in the art without contradicting each other.

Although embodiments of the disclosure have been shown and described above, it will be understood that the above embodiments are illustrative and are not to be construed as limiting the present disclosure. Changes, modifications, alterations and variations of the above-described embodiments may be made by those skilled in the art.

## Claims

1. A cobalt-free lamellar cathode material of a lithium ion battery, comprising:
a LiNi_{0.75}Mn_{0.25}O₂ crystal; and
a lithium ion conductor, the lithium ion conductor being attached to at least part of a surface of the LiNi_{0.75}Mn_{0.25}O₂ crystal, the lithium ion conductor comprising at least one of lithium titanate or lithium manganate, and a mass percentage of the lithium ion conductor being 0.1-2% based on a total mass of the cobalt-free lamellar cathode material,
wherein a specific surface area of the cobalt-free lamellar cathode material is 0.1-0.8 m²/g, and a D₅₀ particle size of the cobalt-free lamellar cathode material is 1-10µm.

2. A cobalt-free lamellar cathode material for a lithium ion battery, comprising:
a LiNiₓMn_{y}O₂ crystal, wherein x+y=1, 0.55≤x≤0.95, 0.05≤y≤0.45; and
a lithium ion conductor, the lithium ion conductor being attached to at least part of a surface of the LiNiₓMn_{y}O₂ crystal.

3. The cobalt-free lamellar cathode material according to claim 2, wherein the lithium ion conductor comprises at least one of lithium titanate and lithium manganate;
optionally, the lithium ion conductor is lithium titanate, and a mass percent of the lithium titanate is 0.1-1% based on the total mass of thee cobalt-free lamellar cathode material; and
optionally, the lithium ion conductor is lithium manganate, and a mass percent of the lithium manganate is 0.1-2% based on the total mass of thee cobalt-free lamellar cathode material.

4. The cobalt-free lamellar cathode material according to claim 2 or 3, wherein that meeting at least one of following conditions:
a specific surface area is 0.1-0.8 m²/g;
a D₅₀ particle size is 1-10 µm; and
x is 0.75 and y is 0.25.

5. A method for preparing the cobalt-free lamellar cathode material according to any one of claims 2-4, comprising the following steps:
providing a LiNiₓMn_{y}O₂ crystal;
mixing the LiNiₓMn_{y}O₂ with a material forming the lithium ion conductor to obtain a first mixture;and
conducting first roasting treatment on the first mixture in an oxygen-containing atmosphere for 5-10 hours at 600-800°C to obtain the cobalt-free lamellar cathode material.

6. The method according to claim 5, wherein the material forming the lithium ion conductor comprises:
a first lithium source; and
at least one of a titanium source and a first manganese source,
optionally, the titanium source comprises at least one of tetrabutyl titanate and titanium oxide, and
optionally, the first manganese source comprises at least one of manganese carbonate, manganese acetate and manganese oxide.

7. The method according to claim 6, wherein the LiNiₓMn_{y}O₂ crystal is provided by the following steps:
mixing a second lithium source, a nickel source and a second manganese source to obtain a second mixture;
conducting second roasting treatment on the second mixture in an oxygen-containing atmosphere for 10-15 hours at 750-1000 °C to obtain the LiNiₓMn_{y}O₂ crystal,
optionally, the first lithium source and the second lithium source each independently comprise at least one of LiOH, Li₂CO₃, CH₃COOLi and LiNO₃,
optionally, the nickel source and the second manganese source each independently comprise NiₐMn_{b}(OH)₂, wherein 0.55≤a≤0.95, 0.05≤b≤0.45.

8. A cathode piece, comprising the cobalt-free lamellar cathode material according to any one of claims 1-4.

9. A lithium ion battery, comprising:
an anode electrode;
a cathode electrode, the cathode electrode comprising the cobalt-free lamellar cathode material according to any one of claims 1-4 or the cathode piece according to claim 8;
a battery diaphragm; and
an electrolyte.

10. The lithium ion battery according to claim 9, wherein that meeting at least one of following conditions:
a first charge specific capacity is not lower than 205.1 mAh/g under a condition of 0.1C charge-discharge rate;
a first discharge specific capacity is not lower than 181.9 mAh/g under a condition of 0.1C charge-discharge rate;
a first charge and discharge specific capacity is not lower than 88.7% under a condition of 0.1C charge-discharge rate;
a capacity retention ratio of the lithium ion battery is not lower than 98.3% after 50 times of charge-discharge cycles under a condition of 1C charge-discharge rate;
a first discharge specific capacity is not lower than 170.2 mAh/g under a condition of 0.5C charge-discharge rate;
a first discharge specific capacity is not lower than 164.8 mAh/g under a condition of 1C charge-discharge rate;
a first discharge specific capacity is not lower than 155.7 mAh/g under a condition of 2C charge-discharge rate;
a first discharge specific capacity is not lower than 149.7 mAh/g under a condition of 3C charge-discharge rate; and
a first discharge specific capacity is not lower than 145.1 mAh/g under a condition of 4C charge-discharge rate.
